# EUROPEAN PATENT SPECIFICATION

(11) **EP 1 790 475 B1**
(45) Date of publication and mention of the grant of the patent: **19.07.2017**
(21) Application number: 05768753.5
(22) Date of filing: 05.08.2005
(51) Int. Cl.: B41J 2/01, B41J 2/485, G06K 15/02, G06K 15/10

(54) **IMAGE RECORDING METHOD AND IMAGE RECORDING DEVICE**
VORRICHTUNG UND VERFAHREN ZUR BILDAUFZEICHNUNG
PROCÉDÉ D' ENREGISTREMENT D'IMAGES ET DISPOSITIF D' ENREGISTREMENT D' IMAGES

(30) Priority: 18.08.2004 JP 2004238239
(43) Date of publication of application: 30.05.2007
(73) Proprietor: Konica Minolta Medical & Graphic, Inc., Hino-shi, Tokyo 191-8511 (JP)
(72) Inventor: Niekawa, Y., Konica Minolta Medical & Graphic Inc., Hachioji-shi, Tokyo 1928505 (JP)
(74) Representative: Stuttard, Garry Philip
(86) International application number: PCT/JP2005/014379
(87) International publication number: WO 2006/018987

(56) References cited:
- JP-A- 7 236 057
- JP-A- 2003 182 048
- JP-A- 2003 182 048
- JP-A- 2004 090 223
- JP-A- 2004 188 815
- US-A- 5 706 414
- US-A- 6 081 340
- US-A1- 2003 184 633

## Description

### TECHNICAL FIELD

The present invention relates to an image recording method and an image recording apparatus, particularly to an image recording method and an image recording apparatus for fixing an image on a recording medium using photocurable ink.

### BACKGROUND

In recent years, the image recording method using photocurable ink has been used to record an image on a recording medium characterized by poor ink absorbing capacity. According to this method, photocurable ink containing a photo-initiator sensitive to a particular beam of light is emitted to reach a recording medium. Then a specific beam of light is applied thereto to cure and fix the ink on the recording medium. This procedure allows an image to be recorded on a recording medium made of polyvinyl chloride or PET (polyethylene terephthalate) having a poor ink absorbing capacity.

To minimize bleeding, discoloration and other failures on the recording medium and to achieve high-quality printing according to the aforementioned image recording method, the following art has been disclosed: Light irradiation range control means is synchronized with the operation of a cartridge so that light will not be applied to the maintenance unit. Thus, light is applied only to the ink that requires curing on the recording medium, and the ink outside this range is not cured (Patent Document 1).

In some cases, image quality is improved by an image recording method using the ink having a plurality of densities in the same color. This method improves the image quality in the low density range. If the density is increased, ink density will exceed 100 %. This will result in an ink overflow, as is widely known.

To keep the amount of emitted ink below the permissible level in such an image recording method, a record master data conforming to the inputted image data and the characteristics of the recording medium is created to set the amount of ink to a specified level. Thus the amount of ink emission is forcibly created, thereby avoiding an ink overflow (Patent Document 2).
[Patent Document 1] Japanese Patent Publication Open to Public Inspection No. 2003-127347
[Patent Document 2] Japanese Patent Publication Open to Public Inspection No. 2003-80691

According to the image recording method based on photocurable ink, the ink having reached a recording medium rises in a convex form. In the so-called solid portion containing much ink, ink particles are linked in the main scanning direction, and the projections and depressions of ink overlap each other to produce uneven ink surfaces in a streaked form, as is widely known.

This is because the ink having risen on the recording medium characterized by ink absorbing capacity is cured in a convex form, with the result that projections and depressions are formed on the recording medium. In the main scanning direction, the timing of the nozzle emitting ink is accurate, and ink reaches the recording medium correctly at predetermined intervals. However, in the sub-scanning direction, while ink is emitted, feed operation is carried out by the conveyance apparatus where precision is inferior to that in the main scanning direction. Depending on the angular error of ink emission and an error in hitting the recording medium, a variation occurs in the precision of the position hit by the ink. Thus, the intervals of variation cause the projections and depressions of ink to overlap with each other, with the result that uneven ink surfaces in a streaked form are produced.

To reduce an overlap of the projections and depressions of ink that is provided when photocurable ink is used and to reduce the uneven ink surfaces, the aforementioned method of ink overflow is applied. This method controls the overall amount of ink emission, and is not necessarily effective in reducing uneven ink surfaces in a streaked form resulting from the overlap of ink projections and depressions specific to the photocurable ink.
JP 2003182048 relates to an ink-jet recording apparatus which divides each colour data into multiple layers to form printing image data.

### DISCLOSURE OF THE INVENTION

The invention is defined in the accompanying claims.

Embodiments of this invention can provide an image recording method and an image recording apparatus capable of reducing the uneven ink surfaces in a streaked form resulting from the overlap of ink projections and depressions on a recording medium printed, using a photocurable ink.

### BRIEF DESCRIPTION OF THE DRAWINGS

Fig. 1 is a schematic configuration diagram representing an image recording apparatus as a first embodiment;
Fig. 2 is a block diagram showing a schematic control configuration of an image recording apparatus as a first embodiment;
Fig. 3 is a diagram showing the relationship between the unit area block and pixel of the present embodiment;
Fig. 4 is a diagram showing an example of the pixel thin-out pattern of the present embodiment;
Fig. 5 is a diagram showing another example of the pixel thin-out pattern of the present embodiment;
Fig. 6 is a block diagram showing a schematic control configuration of an image recording apparatus as a second embodiment;
Fig. 7 is a diagram showing an example of the thin line of the present embodiment; and
Fig. 8 is a diagram showing an example applying a thin-out pattern to the thin line of the present embodiment.

### BEST MODE FOR CARRYING OUT THE INVENTION

The following describes the recording apparatus as an embodiment of the present invention, which is not restricted to the examples shown in Figures.

### [EMBODIMENT 1]

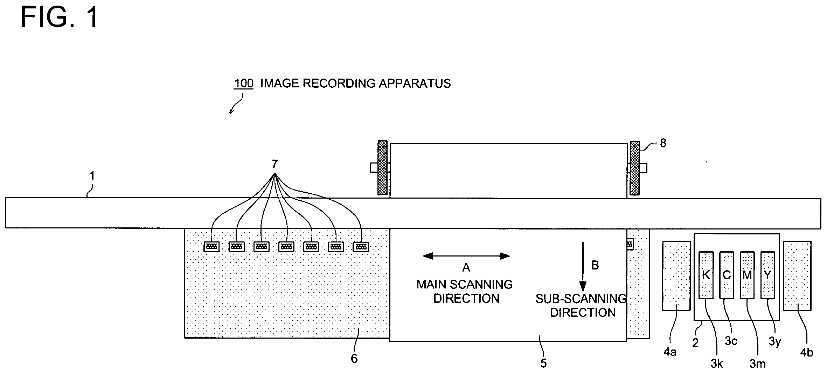

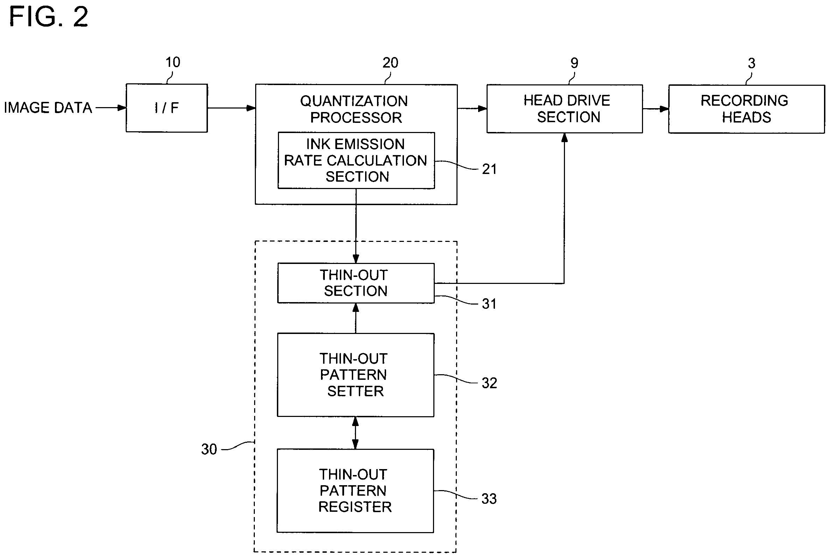

Referring to Figs. 1 and 2, the following describes the image recording apparatus as a first embodiment, not representing the present invention: Fig. 1 is a schematic configuration diagram representing an image recording apparatus 100. Fig. 2 is a block diagram showing a schematic control configuration of an image recording apparatus 100.

As shown in Fig. 1, the image recording apparatus 100 is equipped with a rod-like main scanning guide member 1. A carriage 2 is supported by the main scanning guide member 1, and is driven by a carriage motor (not illustrated). The carriage 2 is freely movable reciprocally in the main scanning direction A, i.e., in the longitudinal direction along the main scanning guide member 1. The direction orthogonal to the main scanning direction A is defined as a sub-scanning direction B.

The carriage 2 is provided with four recording heads 3y, 3m, 3c and 3k driven by a head drive section 9 (not illustrated) in Fig. 1. On each surface of the recording heads 3y, 3m, 3c and 3k opposed to the recording surface of a recording medium 5, a plurality of nozzles (not illustrated) for emitting ink are arranged in the sub-scanning direction B. Inks of process colors -- yellow (Y), magenta (M), cyan (C) and black (K) -- are emitted to the recording surface of the recording medium 5 from the nozzle, based on the image data inputted from the outside.

Two ultraviolet ray irradiation apparatuses 4a and 4b are mounted on both ends of the carriage 2 in the main scanning direction A, wherein the ultraviolet ray irradiation apparatuses 4a and 4b allows ultraviolet rays to be applied to the recording surface of the recording medium 5 through lighting of an irradiation source, thereby curing and fixing the ink having reached the recording surface of the recording medium 5. A low-voltage mercury lamp, high-voltage mercury lamp, metal halide lamp, excimer lamp, hot-cathode tube, cold-cathode tube, ultraviolet laser or LED (Light-Emitting Diode) is used as an ultraviolet ray irradiation apparatus.

A flat platen 6 for supporting the recording medium 5 is provided in the area where recording is applied to the recording medium 5 within the range where the carriage 2 is movable. A conveyance roller 7 is provided upstream from the platen 6 in the sub-scanning direction B, the aforementioned conveyance roller 7 being driven by a conveyance motor (not illustrated) to convey the recording medium 5.

A recording medium winding master roll 8 wound with a long recording medium 5 is arranged rotatably upstream from the platen 6 supporting the non-recording surface of the recording medium 5 in the sub-scanning direction B. The length of recording medium winding master roll 8 can be adjusted to conform to the width of the recording medium 5.

The following describes the image recording apparatus 100 as an embodiment of the present invention, with reference to the block diagram representing the schematic control configuration of the image recording apparatus 100 given in Fig. 2.

In the image recording apparatus 100 having the configuration shown in Fig. 1, the recording heads 3y, 3m, 3c and 3k for printing on a recording medium based on the image data are connected with a head drive section 9, as shown in Fig. 2, so that drive control is provided by the head drive section 9. The head drive section 9 are connected with a quantization processor 20 for quantization of the input data having been inputted from outside; and a number-of-pixels control section 30 for calculating the amount of ink in a predetermined recording area, based on the image data subsequent to quantization and comparing the result with a predetermined value, thereby thinning out the recorded dots the recording area where the ink emission rate exceeds the predetermined value. The quantization processor 20 is connected with an I/F (interface) 10 for inputting the image data from the host computer connected to the outside, including a PC.

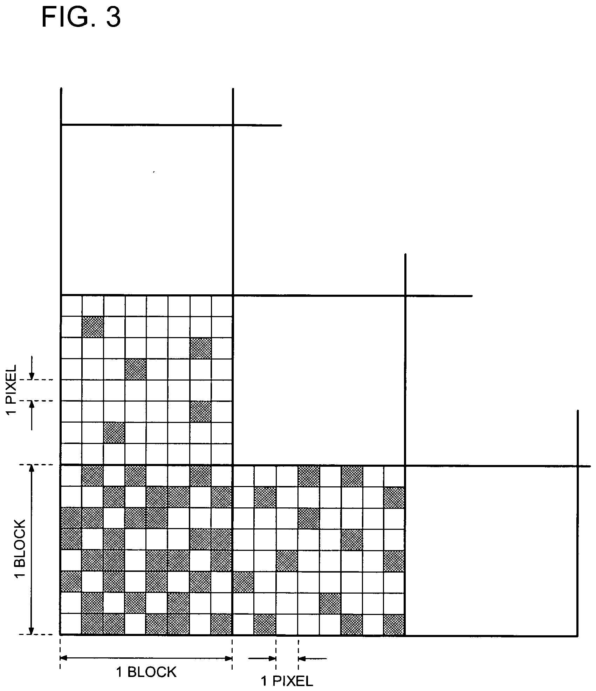

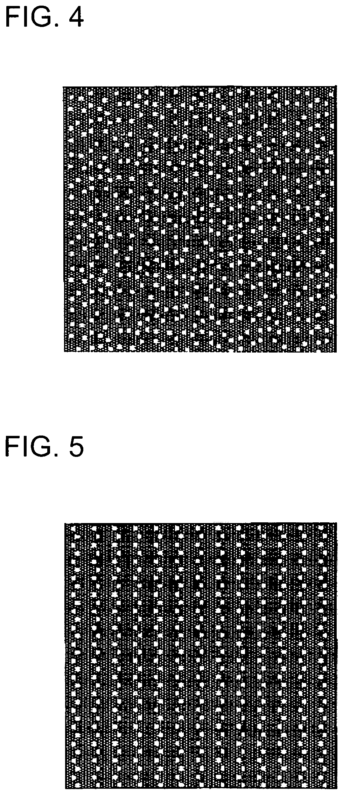

The quantization processor 20 comprises an ink emission calculation section 21, namely, an ink emission rate calculation means for calculating the emission rate of ink per recorded dot in units of blocks having a predetermined recording area, as shown in Fig. 3, and for comparing the result with a predetermined value. The predetermined value is expressed in terms of the percentage of the recording pixels in units of blocks or ink emission rate. The predetermined value is changes with the size of the block. For example, one side of a block is composed of eight pixels, as shown in Fig. 3, and the ink emission rate is 20 pl per pixel. Under this condition, 90% of the recording pixels are equivalent to the ink emission rate of 1152 pl. The number-of-pixels control section 30 comprises:
a thin-out section 31 for thinning out the recorded dots in the area where the ink emission rate per recorded dot has been determined to exceed the predetermined level;
a thin-out pattern setter 32 for selecting from the pattern register 33 the thin-out pattern for thinning out the recorded dots in response to the area where the ink emission rate exceeds the predetermined level, and setting the pattern in the thin-out section 31; and
a pattern register 33, namely, a thin-out recording means where a plurality of thin-out patterns shown in Figs. 4 and 5 are registered. Fig. 4 shows the pixel thin-out pattern for randomly thinning out the recorded dots in the recording area where the amount of ink exceeds a predetermined level. Fig. 5 shows another pixel thin-out pattern wherein the thinned out dots are arranged so that the recorded dots in the recording area where the amount of ink exceeds a predetermined level are thinned out in rows main scanning direction. The pattern register 33 can be configured to register the thin-out pattern wherein the thinned out dots are arranged so as to thin out the recorded dots in rows in the main scanning direction, the aforementioned recorded dots being located in the recording area where the amount of ink exceeds the predetermined value.

Image data is inputted into the head drive section 9 from the ink emission rate from the quantization processor 20 and number-of-pixels control section 30, the aforementioned image data being obtained by thinning out the ink emission rate to be below the predetermined value. This head drive section 9 drives the three-phase, based on the image data so as to emit process color inks of yellow (Y), magenta (M), cyan (C) and black (K) to the recording surface of the recording medium through each of the nozzles of the recording heads 3.

The following describes the image recording method of the present invention using the image recording apparatus 100 as a first embodiment of the present invention:
The image data inputted from the outside is inputted into the quantization processor 20 through the I/F 10 and is subjected to the process of quantization by the quantization processor 20. Based on the image data subsequent to quantization, ink emission rate for each of the recorded dots for each predetermined recording area shown in Fig. 3 is calculated by the ink emission calculation section 21, and the calculated ink emission rate is compared with the predetermined value wherein the percentage of the recording pixels is preset at 90 %. The image data in the recording area where ink emission rate is higher than the predetermined value is outputted to the number-of-pixels control section 30, and the image data in the recording area where ink emission rate is lower than the predetermined value is outputted to the head drive section 9.

For the image data inputted into the number-of-pixels control section 30, the recorded dots in the recording area are thinned out by the thin-out section 31 according to the thin-out pattern corresponding to the recording area. A plurality of the thin-out patterns for thinning out the recorded dots in the recording area used in the thin-out section 31 are registered in advance in the pattern register 33. An appropriate pattern is selected and is set to the thin-out section 31 by the thin-out pattern setter 32.

The pattern register 33 incorporates a thin-out pattern for random thinning out of the recorded dots of the recording area as shown in Fig. 4; a thin-out pattern with the recorded dots arranged in such a way that the recorded dots in the recording area are thinned out in rows in the main scanning direction as shown in Fig. 5; and a thin-out pattern wherein the recorded dots in the recording area in the recording area are thinned out in rows in the sub-scanning direction (not illustrated). The thin-out pattern shown in Fig. 4 permits random thinning out of the recorded dots in the recording area with the ink emission rate exceeding the predetermined value. This provides the image data wherein the recorded dots are thinned out over the entire recording area where the ink emission rate exceeds the predetermined value. The image data having been thinned out is outputted to the head drive section 9 from the thin-out section 31. Use of the thin-out pattern shown in Fig. 5 allows recorded dots to be thinned out in rows in the recording area where the ink emission rate exceeds the predetermined value. This provides the image data with the recorded dots thinned out in the recording area where the ink emission rate exceeds the predetermined value. Thus, the image data having been thinned out is outputted to the head drive section 9 from the thin-out section 31.

Four recording heads 3y, 3m, 3c and 3k are driven according to the image data outputted to the head drive section 9 from the quantization processor 20 and number-of-pixels control section 30. Based on the image data, ink is emitted to the recording surface of the recording medium 5 from each nozzle. Emission of ink is accompanied by the ultraviolet rays applied to the recording surface of the recording medium 5 from the ultraviolet ray irradiation apparatuses 4a and 4b. Then the ink emitted from the recording heads 3y, 3m, 3c and 3k is exposed to ultraviolet rays, upon arrival at the recording medium 5, and is cured immediately to be fixed on the recording surface of the recording medium 5.

While the carriage 2 is moving from left to right in Fig. 1, the ultraviolet ray irradiation apparatus 4a lights up. While the carriage 2 is moving from right to left in Fig. 1, the ultraviolet ray irradiation apparatus 4b lights up. To put it another way, ultraviolet ray irradiation apparatus 4a (or 4b) located downstream from the recording heads 3y, 3m, 3c and 3k in the traveling direction of the carriage 2 lights up to apply ultraviolet rays.

On the other end in the reciprocating motion of the carriage 2, the recording medium 5 is fed in the sub-scanning direction B by the conveyance roller 7, with the non-recording surface supported by the platen 6, while the recording medium winding master roll 8 is rotating.

After that, the image recording apparatus 100 repeats the aforementioned operation, and the images based on the image data composed of a plurality of recorded dots of various process colors are sequentially recorded on the recording surface of the recording medium 5.

In the recording apparatus as the first embodiment described above, calculation is made to find out the recording area where the ink emission rate exceeds the predetermined value, the recorded dots are thinned out. This procedure keeps the ink emission rate at the predetermined value. This reduces overlap of the recorded dots and minimizes the overlap of cured inks on the recording medium using photocurable ink, whereby occurrence of uneven ink surfaces can be prevented.

### [Embodiment 2]

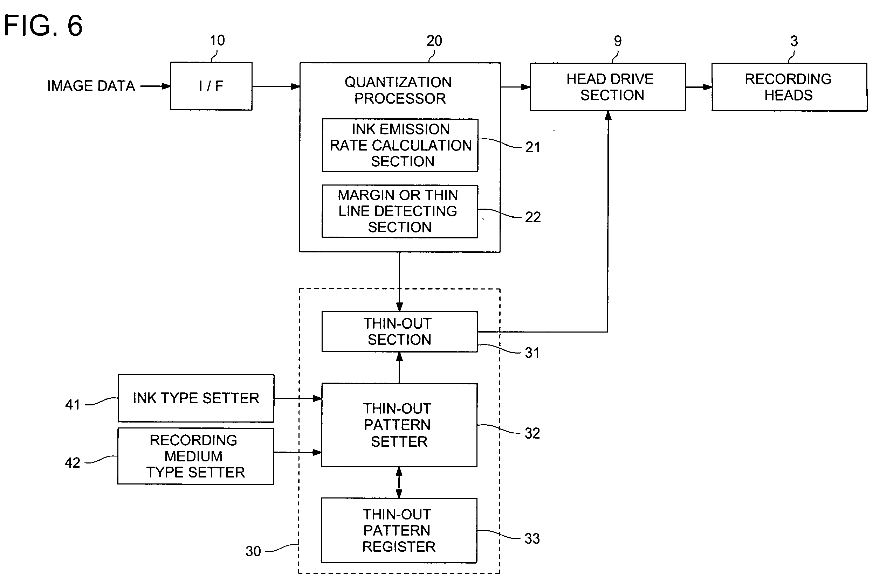

Referring to Fig. 6, the following describes the second embodiment of the image recording apparatus 100, which represents the present invention: In the second embodiment, there is a difference in the configuration of the quantization processor 20 and number-of-pixels control section 30 (Fig. 2) from that of the first embodiment. Otherwise, the configuration is the same with that of the first embodiment (Figs. 3 through 5). The second embodiment will be described mainly with reference to the quantization processor 20 and number-of-pixels control section 30. The same parts as those of the first embodiment will be assigned with the same reference numerals, and the description will be omitted to avoid duplication.

Fig. 6 is a block diagram showing a schematic control configuration of an image recording apparatus 100.

As shown in Fig. 6, the image recording apparatus 100 comprises:
an I/F (interface) 10 for inputting the image data from the host computer connected to the outside including a PC;
a quantization processor 20 for quantization of the image data;
a number-of-pixels control section 30 for calculating the ink emission rate for a predetermined recording area, based on the image data subsequent to quantization; and comparing the result with a predetermined value, thereby thinning out the recorded dots in the recording area where the ink emission rate exceeds the predetermined value;
an ink type setter 41 for setting the type of ink on the number-of-pixels control section 30;
a recording medium type setter 42 for setting the recording medium type on the number-of-pixels control section 30; and
a head drive section 9 for driving recording heads 3y, 3m, 3c and 3k for printing on the recording medium, based on the image data subsequent to quantization.

As shown in Fig. 3, the quantization processor 20 comprises:
an ink emission rate calculation section 21 for calculating the emission rate of ink per recorded dot in units of blocks having a predetermined recording area, and comparing the result with the predetermined value; and
a margin or thin line detecting section 22 for checking if the recording area is a margin or thin line portion.

The number-of-pixels control section 30 comprises:
a thin-out section 31 for thinning out the recorded dots in the area where the ink emission rate per recording dot for each predetermined recording area is determined to exceed the predetermined value;
a thin-out pattern setter 32 for selecting from the pattern register 33 the thin-out pattern corresponding to the ink type or recording medium type inputted from the ink type setter 41 or recording medium type setter 42, and for setting the selected pattern on the thin-out section 31; and
a pattern register 33 for registering the thin-out pattern of a plurality of recorded dots shown in Figs. 4 and 5.

The following describes the image recording method used in the image recording apparatus 100 as a second embodiment:

The image data inputted from the outside is inputted into the quantization processor 20 through the I/F 10 and is subjected to quantization. Based on the image data having been quantized, the ink emission rate calculation section 21 calculates the emission rate of ink per recorded dot in units of blocks having a predetermined recording area shown in Fig. 3. The margin or thin line detecting section 22 checks if the recording area is a margin or thin line portion. The calculated ink emission rate is compared with the preset predetermined value such as the percentage of the recording pixels being 90 %. The image data in the recording area where the ink emission rate is lower than the predetermined value, and the recording area, where the ink emission rate exceeds the predetermined value, having been determined to be a margin or thin line portion, are outputted to the head drive section 9. The recording area, other than the aforementioned one, where the ink emission rate exceeds the predetermined value is outputted to the number-of-pixels control section 30.

The image data having been inputted to the number-of-pixels control section 30 is subjected to thinning out of the recorded dots in the recording area by the thin-out section 31, using the thin-out pattern corresponding to the predetermined recording area. After thinning out, the image data is outputted to the head drive section 9. A plurality of the thin-out patterns for thinning out the recorded dots, used by the thin-out section 31, are registered in the pattern register 33 in advance. An appropriate one is selected by the thin-out pattern setter 32 and the selected one is set on the thin-out section 31. The thin-out pattern setter 32 selects the optimum thin-out pattern best suited to the ink type or recording medium type inputted by the ink type setter 41 or recording medium type setter 42. The ink type setter 41 or recording medium type setter 42 can be installed, for example, on the operation panel, PC or ink tank to detect the ink type or recording medium type.

To show an example of a thin-out pattern, Table 1 shows the ink emission rate per unit area and the thinning out rate of the recorded dots when the recording medium is made of PET (polyethylene terephthalate), polyvinyl chloride/tarpaulin or YUPO coated paper. Since the dot diameter when ink has hit the recording medium varies according to the characteristics of the recording medium and ink such as viscosity, spread, and wettability, projections and depressions the ink produced by a combination of the recording medium and ink to be used are different. Accordingly, the ink emission rate and thin-out rate of the recorded dots are also different. When the recording medium is made of polyvinyl chloride/tarpaulin or YUPO coated paper, the ink having reached the recording medium is cured without the dot diameter being increased. This increases the ink emission rate per predetermined area, and the thin-out rate of the recorded dots, as well. Conversely, in the case of PET, the ink having been hit the recording medium is cured after the dot diameter has increased. This reduces the ink emission rate per predetermined area, and the thin-out rate of the recorded dots, as well.

**Table 1**

| Recording medium | Ink emission rate (ml/m²) | Thin-out rate (%) |
|---|---|---|
| PET | 9.6 | 5 |
| Polyvinyl chloride/tarpaulin | 12.9 | 11 |
| YUPO coated paper | 14.5 | 13 |

Table 1 shows the ink emission rate for each color and recorded dot thin-out rate. Basically, the same values are set for all colors, but adjustment for each color is also possible. Further, for the secondary color or higher, the total amount of ink emission can be controlled for all colors by the ink rate restriction method having been long practiced, such as the UCR method, and the present invention can be applied to the portion of highly packed recorded dots for each color, whereby processing of thinning out can be carried out.

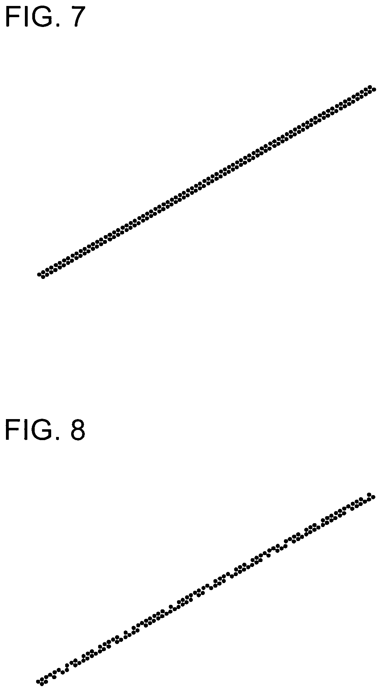

In the recording apparatus as a second embodiment described above, ink emission rate per recorded dot for a predetermined area is calculated and the result is compared with the predetermined value. In the recording area where the ink emission rate exceeds the predetermined value, the recorded dots are thinned out using the thin-out pattern best suited to the types of the ink and recording medium being used, so that the ink emission rate can be kept to the predetermined value. This procedure reduces the overlap of the recorded dots and the overlap of the cured ink that may occur to the recording medium when photocurable ink is used. Thus, occurrence of uneven ink surfaces can be reduced. Further, the pixel thin-out pattern is not applied to the recorded dots in the recording area of the margin or thin line section shown in Fig. 7. This ensures image recording free from a blur shown in Fig. 8.

### INDUSTRIAL APPLICABILITY

According to the embodiment, ink emission rate per recorded dot for each predetermined recording area is calculated, based on the image data having been quantized. The result is compared with the predetermined value. The recorded dots in the recording area where the ink emission rate exceeds the predetermined value are thinned out using the thin-out pattern, thereby reducing the ink emission rate and recording the image. This arrangement reduces the overlap of the ink in the recorded dots and the differences in projections and depressions of ink. This method therefore minimizes the uneven ink surfaces resulting from overlap of the ink projections and depressions.

By thinning out the recorded dots in the recording area where the ink emission rate is higher, it is possible to thin out the recorded dots where uneven ink surfaces in a streaked form are likely to occur, and to reduce the overlap of the ink in recorded dots. This makes it possible to minimize the uneven ink surfaces resulting from overlap of the ink projections and depressions. Thus, this procedure provides an image recording method characterized by high image quality.

By thinning out the recorded dots in the recording area of higher ink emission rate using the thin-out pattern, it is possible to provide an image recording method for ensuring high image quality capable of minimizing uneven ink surfaces in a streaked form resulting from overlap of the ink projections and depressions.

The projections and depressions of ink on the recording medium differ according to the type of the recording medium, ink and a combination thereof. Accordingly, the overlap of ink in the recorded dots is reduced, using the thin-out pattern for thinning out the overlap of the ink in the recorded dots in response to the particular condition of each of the projections and depressions. This makes it possible to provide an image recording method, for recording a high quality image, capable of minimizing uneven ink surfaces resulting from overlap of the ink projections and depressions.

Evaluation is made to check whether or not the recording area is a margin or thin line portion. Based on the result, the recorded dots in the margin or thin line portion are not thinned out, even if the ink emission rate exceeds the predetermined value. This procedure prevents a blur from occurring on the image. This makes it possible to provide an image recording method, for recording a high quality image, capable of recording high-quality image faithful to the image data having been inputted.

The photocurable ink is cationic polymerized ink, which can be cured by application of ultraviolet rays. The cationic polymerized ink is more sensitive to ultraviolet rays than radical polymerized ink. The adverse effect on the polymerized system is smaller than that in the case of the radical polymerized ink. This makes it possible to reduce the level of illumination required to cure the ink emitted on the recording medium.

## Claims

1. An image recording method comprising:
quantizing image data;
calculating an ink emission rate per a predetermined recording area based on the quantized image data;
judging whether the ink emission rate is less than a predetermined value in the recording area or not;
when the ink emission rate is judged to be not less than the predetermined value, thinning out the image data using a thin-out pattern corresponding to the recording area;
discharging a photocurable ink from a recording head (3y, 3m, 3c, 3k) onto a recording medium (5) based on the thinned-out image data to form recorded dots of the predetermined recording area on the recording medium, wherein the ink emission rate onto the predetermined recording area is less than the predetermined value; and
irradiating the photocurable ink of the recorded dots with light to record an image by curing and fixing the recorded dots,
**characterised in that**:
the thin-out pattern defines a thin-out rate of the recorded dots, wherein a diameter of the recorded dots before said curing varies according to characteristics of the recording medium and ink, and wherein the thin out rate corresponds to a percentage of dots removed by the thin-out pattern, and
the thin-out rate used for the recorded dots of the predetermined recording area decreases as said diameter of the recorded dots on the recording medium before curing increases.

2. The image recording method of claim 1, comprising using photocurable inks of a plurality of colors, wherein the method further comprises performing said calculating step separately for each color.

3. The image recording method of claim 1, wherein the thinned out dots in the thin-out pattern are arranged at random.

4. The image recording method of claim 1, wherein the thinned out dots in the thin-out pattern are arranged in rows in a main scanning direction.

5. The image recording method of claim 1, wherein the thinned out dots in the thin-out pattern are arranged in rows in a sub-scanning direction.

6. The image recording method of claim 1, further comprising:
detecting a margin or thin line portion of the image data in the recording area, and
thinning out the image data by using a thin-out pattern corresponding to a part of the recording area other than the margin or thin line portion based on the result of the detection.

7. An image recording apparatus (100), comprising:
a quantization processor (20) for quantizing image data;
an ink emission rate calculation section (21) for calculating an ink emission rate per a predetermined recording area based on the quantized image data;
a judgment section for judging whether the ink emission rate is less than a predetermined value in the recording area or not;
a thin-out section (31) for thinning out the image data using a thin-out pattern corresponding to the recording area when the ink emission rate is judged by the judgment section to be not less than the predetermined value;
a recording head (3y, 3m, 3c, 3k) for forming recorded dots of the predetermined recording area on the recording medium by discharging a photocurable ink based on the thinned-out image data, wherein the ink emission rate onto the predetermined recording area is less than the predetermined value;
a light irradiation apparatus (4a, 4b) for irradiating the photocurable ink of the recorded dots with light to record an image by curing and fixing the recorded dots;
**characterised in that**:
the thin-out pattern used by the thin-out section defines a thin-out rate of the recorded dots, wherein a diameter of the recorded dots before said curing varies according to characteristics of the recording medium and ink, and wherein the thin out rate corresponds to a percentage of dots removed by the thin-out pattern, and
the thin-out rate used for the recorded dots of the predetermined recording area decreases as said diameter of the recorded dots on the recording medium before curing increases.

8. The image recording apparatus of claim 7, wherein the ink emission rate calculation section is operable to calculate the emission of ink separately for each of the inks of a plurality of colors when photocurable inks of a plurality of colors are used.

9. The image recording apparatus of claim 7, wherein the thinned out dots in the thin-out pattern are arranged at random.

10. The image recording apparatus of claim 7, wherein the thinned out dots in the thin-out pattern are arranged in rows in a main scanning direction.

11. The image recording apparatus of claim 7, wherein the thinned out dots in the thin-out pattern are arranged in rows in a sub-scanning direction.

12. The image recording apparatus of claim 7, further comprising:
a margin or thin line detecting section (22) for detecting a margin or thin line portion of the image data in the recording area, and
a thin-out section (31) for thinning out the image data by using a thin-out pattern corresponding to a part of the recording area other than the margin or thin line portion based on the result of the detection.

13. The image recording apparatus of claim 7, wherein the light irradiation apparatus (4a, 4b) is operable to emit ultraviolet rays.

14. The image recording apparatus of claim 7, wherein the photocurable ink is cationic polymerized ink.

## Patentansprüche

1. Ein Bildzeichnungsverfahren, das umfasst:
Quantisieren von Bilddaten,
Berechnen einer Tintenemissionsrate für einen vorbestimmten Aufzeichnungsbereich, basierend auf den quantisierten Bilddaten,
Bewerten, ob die Tintenemissionsrate weniger als ein vorbestimmter Wert in dem Aufzeichnungsebereich ist oder nicht,
wenn die Tintenemissionsrate so bewertet wird, dass sie nicht weniger als der vorbestimmte Wert ist, Ausdünnen der Bilddaten unter Verwendung eines Ausdünnmusters, das dem Aufzeichnungsbereich korrespondiert,
Austragen einer lichthärtbaren Tinte von einem Aufzeichnungskopf (3y,3m,3c,3k) auf ein Aufzeichnungsmedium (5), basierend auf den ausgedünnten Bilddaten, um aufgezeichnete Punkte des vorbestimmten Aufzeichnungsbereichs auf dem Aufzeichnungsmedium auszubilden, wobei die Tintenemissionsrate auf dem vorbestimmten Aufzeichnungsbereich kleiner als der vorbestimmte Wert ist, und
Bestrahlen der lichtaushärtbaren Tinte der aufgezeichneten Punkte mit Licht, um ein Bild durch Aushärten und Fixieren der aufgezeichneten Punkte aufzuzeichnen,
**dadurch gekennzeichnet, dass**:
das Ausdünnmuster eine Ausdünnrate der aufgezeichnete Punkte festlegt, wobei ein Durchmesser der aufgezeichneten Punkte vor besagtem Aushärten gemäß Eigenschaften des Aufzeichnungsmediums und der Tinte variiert, und wobei die Ausdünnrate zu einem Prozentsatz von Punkten, die durch das Ausdünnmuster entfernt werden, korrespondiert, und
die Ausdünnrate, die für die Aufzeichnungspunkte des vorbestimmten Aufzeichnungsbereichs verwendet wird sinkt, wenn sich der besagte Durchmesser der aufgezeichneten Punkte auf dem Aufzeichnungsmedium, vor dem Aushärten bergrößert.

2. Das Bildaufzeichnungsverfahren gemäß Anspruch 1, das eine Verwendung lichtaushärtbarer Tinten einer Mehrzahl von Farben umfasst, wobei das Verfahren ferner den besagten Berechnungsschritt separat für jede Farbe durchführt.

3. Das Bildaufzeichnungsverfahren gemäß Anspruch 1, wobei die ausgedünnten Punkte in dem Ausdünnmuster zufällig angeordnet sind.

4. Das Bildaufzeichnungsverfahren gemäß Anspruch 1, wobei die ausgedünnten Punkte in dem Ausdünnmuster in Reihen in einer Hauptabtastrichtung angeordnet sind.

5. Das Bildaufzeichnungsverfahren gemäß Anspruch 1, wobei die ausgedünnten Punkte in dem Ausdünnmuster in Reihen in einer Nebenabtastrichtung angeordnet sind.

6. Das Bildaufzeichnungsverfahren gemäß Anspruch 1, ferner umfassend:
Erfassen eines Rands oder eines Dünnlinienabschnitts der Bilddaten in dem Aufzeichnungsbereich, und
Ausdünnen der Bilddaten unter Verwendung eines Ausdünnmusters, das einem Teil des Aufzeichnungsbereichs korrespondiert, der ein anderer ist als der Rand oder der Dünnlinienabschnitt, basierend auf dem Ergebnis der Erfassung.

7. Eine Bildaufzeichnungsvorrichtung (100), die umfasst:
ein Quantisierungsprozessor (20) zum Quantisieren von Bilddaten,
einen Tintenemissionsratenberechnungsabschnitt (21) zum Berechnen einer Tintenemissionsrate je vorbestimmten Aufzeichnungsbereich basierend auf den quantisierten Bilddaten,
einen Bewertungsabschnitt zum Bewerten, ob in dem Aufzeichnungsbereich die Tintenemissionsrate weniger als ein vorbestimmter Wert ist oder nicht,
einen Ausdünnabschnitt (31) zum Ausdünnen der Bilddaten unter Verwendung eines Ausdünnmusters, das dem Aufzeichnungsbereich korrespondiert, wenn die Tintenemissionsrate durch den Bewertungsabschnitt so bewertet ist, dass sie weniger als der vorbestimmte Wert ist,
einen Aufzeichnungskopf (3y,3m,3c,3k) zum Bilden von aufgezeichneten Punkten des vorbestimmten Aufzeichnungsbereichs auf dem Aufzeichnungsmedium durch Austragen einer lichthärtbaren Tinte basierend auf den ausgedünnten Bilddaten, wobei die Tintenemissionsrate auf den vorbestimmten Aufzeichnungsbereich weniger als der vorbestimmte Wert ist,
eine Lichtbestrahlungsvorrichtung (4a,4b) zum Bestrahlen der lichthärtbaren Tinte der aufgezeichneten Punkte mit Licht, um ein Bild durch Aushärten und Fixieren der aufgezeichneten Punkte aufzuzeichnen,
**dadurch gekennzeichnet, dass**:
das Ausdünnmuster, das von dem Ausdünnabschnitt verwendet wird, eine Ausdünnrate der aufgezeichneten Punkte festlegt, wobei ein Durchmesser der aufgezeichneten Punkte vor besagtem Aushärten gemäß Eigenschaften des Aufzeichnungsmediums und der Tinte variiert, und wobei die Ausdünnrate einem Prozentsatz von Punkten, die durch das Ausdünnmuster entfernt werden, korrespondiert, und
die Ausdünnrate, die für die aufgenommenen Punkte des vorbestimmten Bereichs verwendet wird, sinkt, wenn sich der besagte Durchmesser der aufgezeichneten Punkte auf dem Aufzeichnungsmedium, vor dem Aushärten vergrößert.

8. Die Bildzeichnungsvorrichtung gemäß Anspruch 7, wobei der Tintenemissionsratenberechnungsabschnitt so betrieben werden kann, dass er die Emissionsrate separat für jede der Tinten einer Mehrzahl von Farben berechnet, wenn lichtaushärtbare Tinten einer Mehrzahl von Farben verwendet werden.

9. Die Bildaufzeichnungsvorrichtung gemäß Anspruch 7, wobei die ausgedünnten Punkte in dem Ausdünnmuster wahllos angeordnet sind.

10. Die Bildaufzeichnungsvorrichtung gemäß Anspruch 7, wobei die ausgedünnten Punkte in dem Ausdünnmuster in Reihen in einer Hauptabtastrichtung angeordnet sind.

11. Die Bildaufzeichnungsvorrichtung gemäß Anspruch 7, wobei die ausgedünnten Punkte in dem Ausdünnmuster in Reihen in einer Nebenabtastrichtung angeordnet sind.

12. Die Bildaufzeichnungsvorrichtung gemäß Anspruch 7, ferner umfassend:
einen Rand oder einen Dünnlinienerfassungsabschnitt (22) zum Erfassen eines Rands oder eines dünnlinigen Abschnitts der Bilddaten in dem Aufzeichnungsbereich, und
einen Ausdünnabschnitt (31) zum Ausdünnen der Bilddaten basierend auf dem Ergebnis der Erfassung unter Verwendung eines Ausdünnmusters, das einem Teil des Aufzeichnungsbereichs korrespondiert, der ein anderer ist, als der Rand oder der dünnlinige Abschnitt.

13. Die Bildaufzeichnungsvorrichtung gemäß Anspruch 7, wobei die Lichtbestrahlungsvorrichtung (4a,4b) so betrieben werden kann, dass sie ultraviolette Strahlung emittiert.

14. Die Bildaufzeichnungsvorrichtung gemäß Anspruch 7, wobei die lichthärtbare Tinte kationisch polymerisierte Tinte ist.

## Revendications

1. Procédé d'enregistrement d'images comprenant les étapes ci-dessous consistant à :
quantifier des données d'images ;
calculer un taux d'émission d'encre pour une zone d'enregistrement prédéterminée sur la base des données d'images quantifiées ;
évaluer si le taux d'émission d'encre est inférieur ou non à une valeur prédéterminée dans la zone d'enregistrement ;
lorsque le taux d'émission d'encre est évalué comme n'étant pas inférieur à la valeur prédéterminée, réduire les données d'images en utilisant un motif de réduction correspondant à la zone d'enregistrement ;
décharger une encre photo-durcissable à partir d'une tête d'enregistrement (3y, 3m, 3c, 3k) sur un support d'enregistrement (5), sur la base des données d'images réduites, en vue de former des points enregistrés de la zone d'enregistrement prédéterminée sur le support d'enregistrement, dans lequel le taux d'émission d'encre sur la zone d'enregistrement prédéterminée est inférieur à la valeur prédéterminée ; et
irradier l'encre photo-durcissable des points enregistrés avec de la lumière pour enregistrer une image en faisant durcir et en fixant les points enregistrés ;
**caractérisé en ce que** :
le motif de réduction définit un taux de réduction des points enregistrés, dans lequel un diamètre des points enregistrés avant ledit durcissement varie en fonction de caractéristiques du support d'enregistrement et de l'encre, et dans lequel le taux de réduction correspond à un pourcentage de points supprimés par le motif de réduction ; et
le taux de réduction utilisé pour les points enregistrés de la zone d'enregistrement prédéterminée diminue à mesure qu'augmente ledit diamètre des points enregistrés sur le support d'enregistrement avant le durcissement.

2. Procédé d'enregistrement d'images selon la revendication 1, comprenant l'étape consistant à utiliser des encres photo-durcissables d'une pluralité de couleurs, dans lequel le procédé comporte en outre l'étape consistant à mettre en oeuvre ladite étape de calcul séparément pour chaque couleur.

3. Procédé d'enregistrement d'images selon la revendication 1, dans lequel les points réduits dans le motif de réduction sont agencés de manière aléatoire.

4. Procédé d'enregistrement d'images selon la revendication 1, dans lequel les points réduits dans le motif de réduction sont agencés en rangées dans une direction de balayage principal.

5. Procédé d'enregistrement d'images selon la revendication 1, dans lequel les points réduits dans le motif de réduction sont agencés en rangées dans une direction de sous-balayage.

6. Procédé d'enregistrement d'images selon la revendication 1, comprenant en outre les étapes ci-dessous consistant à :
détecter une marge ou une partie de ligne mince des données d'images dans la zone d'enregistrement ; et
réduire les données d'images en utilisant un motif de réduction correspondant à une partie de la zone d'enregistrement distincte de la marge ou de la partie de ligne mince sur la base du résultat de la détection.

7. Appareil d'enregistrement d'images (100), comprenant :
un processeur de quantification (20) destiné à quantifier des données d'images;
une section de calcul de taux d'émission d'encre (21) destinée à calculer un taux d'émission d'encre pour une zone d'enregistrement prédéterminée sur la base des données d'images quantifiées ;
une section d'évaluation destinée à évaluer si le taux d'émission d'encre est inférieur ou non à une valeur prédéterminée dans la zone d'enregistrement ;
une section de réduction (31) destinée à réduire les données d'images en utilisant un motif de réduction correspondant à la zone d'enregistrement, lorsque le taux d'émission d'encre est évalué, par la section d'évaluation, comme n'étant pas inférieur à la valeur prédéterminée ;
une tête d'enregistrement (3y, 3m, 3c, 3k) destinée à former des points enregistrés de la zone d'enregistrement prédéterminée sur le support d'enregistrement, en déchargeant une encre photo-durcissable sur la base des données d'images réduites, dans lequel le taux d'émission d'encre sur la zone d'enregistrement prédéterminée est inférieur à la valeur prédéterminée ; et
un appareil d'irradiation lumineuse (4a, 4b) destiné à irradier l'encre photo-durcissable des points enregistrés avec de la lumière pour enregistrer une image en faisant durcir et en fixant les points enregistrés ;
**caractérisé en ce que** :
le motif de réduction utilisé par la section de réduction définit un taux de réduction des points enregistrés, dans lequel un diamètre des points enregistrés avant ledit durcissement varie en fonction de caractéristiques du support d'enregistrement et de l'encre, et dans lequel le taux de réduction correspond à un pourcentage de points supprimés par le motif de réduction ; et
le taux de réduction utilisé pour les points enregistrés de la zone d'enregistrement prédéterminée diminue à mesure qu'augmente ledit diamètre des points enregistrés sur le support d'enregistrement avant le durcissement.

8. Appareil d'enregistrement d'images selon la revendication 7, dans lequel la section de calcul de taux d'émission d'encre est exploitable de manière à calculer l'émission d'encre séparément pour chacune des encres d'une pluralité de couleurs lorsque sont utilisées des encres photo-durcissables d'une pluralité de couleurs.

9. Appareil d'enregistrement d'images selon la revendication 7, dans lequel les points réduits dans le motif de réduction sont agencés de manière aléatoire.

10. Appareil d'enregistrement d'images selon la revendication 7, dans lequel les points réduits dans le motif de réduction sont agencés en rangées dans une direction de balayage principal.

11. Appareil d'enregistrement d'images selon la revendication 7, dans lequel les points réduits dans le motif de réduction sont agencés en rangées dans une direction de sous-balayage.

12. Appareil d'enregistrement d'images selon la revendication 7, comprenant en outre :
une section de détection de marge ou de ligne mince (22) destinée à détecter une marge ou une partie de ligne mince des données d'images dans la zone d'enregistrement ; et
une section de réduction (31) destinée à réduire les données d'images en utilisant un motif de réduction correspondant à une partie de la zone d'enregistrement distincte de la marge ou de la partie de ligne mince sur la base du résultat de la détection.

13. Appareil d'enregistrement d'images selon la revendication 7, dans lequel l'appareil d'irradiation lumineuse (4a, 4b) est exploitable de manière à émettre des rayons ultraviolets.

14. Appareil d'enregistrement d'images selon la revendication 7, dans lequel l'encre photo-durcissable correspond à de l'encre cationique polymérisée.
